# EUROPÄISCHE PATENTSCHRIFT

(11) **EP 2 474 061 B1**
(45) Veröffentlichungstag und Bekanntmachung des Hinweises auf die Patenterteilung: **18.06.2014**
(21) Anmeldenummer: 10751624.7
(22) Anmeldetag: 31.08.2010
(51) Int. Cl.: H01M 6/50, H01M 10/60

(54) **KÜHLBLECH FÜR EINE GALVANISCHE ZELLE UND VERFAHREN ZUM ANBINDEN EINES KÜHLBLECHS**
COOLING PLATE FOR A GALVANIC CELL AND METHOD FOR CONNECTING A COOLING PLATE
PLAQUE DE REFROIDISSEMENT POUR UNE PILE GALVANIQUE ET PROCÉDÉ DE CONNEXION D'UNE PLAQUE DE REFROIDISSEMENT

(30) Priorität: 31.08.2009 DE 102009039394
(43) Veröffentlichungstag der Anmeldung: 11.07.2012
(73) Patentinhaber: Behr GmbH & Co. KG, 70469 Stuttgart (DE)
(72) Erfinder: HECKENBERGER, Thomas, 70771 Leinfelden-Echterdingen (DE); HERRMANN, Hans-Georg, 70619 Stuttgart (DE); ISERMEYER, Tobias, 74245 Löwenstein (DE); LORENZ, Roman, 71634 Ludwigsburg (DE); MOSER, Michael, 73492 Rainau (DE)
(74) Vertreter: Grauel, Andreas
(86) Internationale Anmeldenummer: PCT/EP2010/062680
(87) Internationale Veröffentlichungsnummer: WO 2011/023823

(56) Entgegenhaltungen:
- WO-A1-2009/062710
- DE-A1-102007 050 400
- DE-A1-102007 063 176
- DE-B4- 10 223 782

## Beschreibung

Die vorliegende Erfindung besieht sich auf ein Kühlblech für eine galvanische Zelle, ein Verfahren zum Anbinden eines Kohlblechs für eine galvanische Zelle an eine Kühlplatte, sowie eine Zellvorrichtung.

Es bestehen verschiedene Möglichkeiten zur Anbindung eines Zellenverbundes, insbesondere aus Lithium-Ionen-Zellen, mit integriertem Kühlelement an eine Wärmesenke.

Die DE 10 2007 050 400 A1 offenbart eine Vorrichtung zur elektronischen Energiespeicherung, bei welcher ein Kühlelement vorgesehen sind, wobei das Kühlelement mindestens eine Öffnung aufweist in die ein wärmeübertragendes Element eingesteckt ist.

Die Druckschrift DE 10 2007 063 176 A1 beschreibt Anbindungsmöglichkeiten der Kühlbleche in verschiedenen Ausführungen an einer Kühlplatte.

Die Druckschrift DE 102007066944.4 beschreibt u.a. eine Kühlung von Batterieflachzefien, die als thermischen Pfad Kühlbleche vorweist. Es wird erwähnt, dass die Bleche mit der Kühlplatte in thermischem Kontakt stehen; dieser Kontakt sollte durch Vergießen hergestellt werden,

Die Druckschrift DE 102 23 782 B4 beschreibt eine Kühleinrichtung für Rundzellen, bestehend aus einer Grundplatte und seitlich in Längsrichtung an den Zellen anliegenden Kühlelementen. Die Zellen sind kraftschlüssig mit der Kühleinrichtung verbunden, die anlegenden Kühlelemente verfügen über Dehnfugen, um die Problematik der Spaltbildung und des Wärmeübergangs zu verbessern.

Die Technologie des Anklebens oder Vergießens von Kühlblechen auf eine Kühlplatte weist nicht die gewünschte Haltbarkeit und Prozessfähigkeit auf und ist nicht wider lösbar, D.h., defekte Zellen können nicht ausgetauscht werden.

Alternativ können Zellen bzw. Module kraftschlüssig an die Wärmesenke angebunden werden. Die Wärmeübertragung erfolgt vom Zellkörper oder Zellmaritel direkt auf die Wärmesenke oder indirekt über Kühlelemente an die Wärmesenke. Um eine große Kontaktfläche und damit einen guten Wärmeübergang zu erreichen, sind geringe Fertigungstoleranzen notwendig, die einen erheblichen Kostenaufwand verursachen, oder sehr flexible Elemente.

Eine optimale Wärmeübertragung erfolgt über eine stoffschlüssige Verbindung. Aktuelle stoffschlüssige Verbindungen beeinträchtigen jedoch durch den hohen Temperatureintrag infolge des Fertigungsverfahrens die Qualität der Zelle. Stoffschlüssige Verbindungen mit geringem Temperatureintrag hingegen können sich durch dynamische Belastungen verschlechtern oder lösen oder sind nicht mehr demontierbar, um defekte Zellen auszutauschen.

Es ist die Aufgabe der vorliegenden Erfindung, ein verbessertes Kühlblech für eine galvanische Zelle, ein verbessertes Verfahren zum Anbinden eines Kühlblechs und eine verbesserte Zellvorrichtung zu schaffen.

Diese Aufgabe wird durch ein Kühlblech für eine galvanische Zelle gemäß Anspruch 1, ein Verfahren zum Anbinden eines Kühlblechs für eine galvanische Zelle an eine Kühlplatte gemäß Anspruch 3 sowie eine Zellvorrichtung gemäß Anspruch 8 gelöst.

Die vorliegende Erfindung basiert darauf, dass galvanische Zellen, insbesondere Li-Ionen-Zellen auf ein Kühlblech aufgebracht werden können, das kraftschlüssig, stoffschlüssig oder kraft- und stoffschlüssig mit einer Wärmesenke, z.B. einer mit einem Fluid durchflossenen Kühlplatte, verbunden werden kann. Dabei erlaubt es die erfindungsgemäße Konstruktion des Kühlblechs, dass mittels eines Falzbereichs eine Entkoppelung zwischen der mechanischen Anbindung des Kühlblechs an die Kühlplatte und der thermischen Kontaktierung zwischen Kühlblech und Kühlplatte realisiert werden kann,

Vorteilhafterweise kann gemäß diesem Ansatz eine thermisch bessere Kontaktierung zwischen Kühlblech und Kühlplatte durch Entkopplung von kraftschlüssiger Verbindung und thermischer Kontaktierung erzielt werden. Zudem ermöglicht die Konstruktion die Vermeidung einer mechanischen Belastung der thermischen Kontaktierung. Auch eine Wiederlösbarkeit der Verbindung und damit ein Austausch von Zellen werden ohne eine thermische Beeinträchtigung der Zellen möglich. Dies trifft insbesondere für den Fall der kraftschlüssigen Verbindung zu.

Wird die stoffschlüssige Verbindung realisiert, so ist eine optimale Wärmeübertragung über die stoffschlüssige Verbindung gegeben, ohne dass eine thermische Beeinträchtigung der Zelle besteht. Erfindungsgemäß besteht durch Entkopplung keine mechanische Belastung der stoffschlüssigen Verbindung. Auch bei der stoffschlüssigen Verbindung kann zusätzlich eine kraftschlüssige Verbindung realisiert werden,

Die vorliegende Erfindung schafft ein Kühlblech für eine galvanische Zelle, mit folgenden Merkmalen: Einem Zellbereich, der ausgebildet ist, um mit der galvanischen Zelle gekoppelt zu werden; einem Verbindungsbereich, der ausgebildet ist, um mechanisch und thermisch mit einer Kühlplatte verbunden zu werden; und einem Falzbereich, der zwischen dem Zellbereich und dem Verbindungsbereich angeordnet ist und eine flexible Falzung des Kühlblechs aufweist.

Bei dem Kühlblech kann es sich um einen Metallstreifen oder eine Metallplatte mit guten Wärrmeleiteigenschaften handeln, so dass es die Wärme gut von der galvanischen Zelle ableiten kann. Die Materialeigenschaften des Kühlblechs können zudem so ausgebildet sein, dass das Kühlblech zum einen eine erforderliche Stabilität und Festigkeit aufweist, um als Halterung für die galvanische Zelle zu dienen. Zum anderen kann das Kühlblech unter Kraftaufwendung umgeformt werden, um mit einer entsprechend ausgeformten Aussparung oder Durchgangsöffnung in der Kühlplatte verkantet und so an der Kühlplatte befestigt zu werden. Das Kühlblech kann über seine ganze Länge oder über Teilbereiche zweiteilig sein. Das bedeutet, dass das Kühlblech beispielsweise aus zwei parallel geführten Metallblechen aufgebaut ist. Die beiden Metallbleche können beispielsweise im Zellbereich test miteinander verbunden sein. Im Falzbereich und im Verbindungsbereich können die beiden Metallbleche dagegen voneinander beabstandet sein,

Unter dem Zellbereich des Kühlblechs kann ein gerade verfaulender Abschnitt des Kühlblechs verstanden werden, an dem die galvanische Zelle angebracht werden kann. Durch den Zellbereich kann die galvanische Zelle gehalten und gekühlt werden. Beispielsweise kann die galvanische Zelle auf den Zellbereich des Kühlblechs aufgeklebt werden. Der Zellbereich des Kühlblechs kann aber auch in die galvanische Zelle integriert sein. Ferner kann der Zellbereich ausgebildet sein, um zwei oder mehr galvanische Zellen aufzunehmen.

Der Verbindungsbereich des Kühlblechs kann ein Abschnitt des Kühlblechs sein, der z.B. in eine Durchgangsöffnung der Kühlplatte eingesetzt werden kann. Der Verbindungsbereich Kann beim Einsetzen oder anschließend derart verformt werden, dass der Verbindungsbereich vollständig oder zumindest teilweise innerhalb der Durchgangsöffnung an der Kühlplatte anliegt. Über entsprechende Berührungsbereiche kann die mechanische und thermische Verbindung zwischen Kühlblech und Kühlplatte gebildet werden. Die thermische Verbindung ergibt sich aus dem Anliegen des Verbindungsbereichs an der Öffnungsfläche. Über die thermische Verbindung kann Wärme aus dem Kühlblech an die Kühlplatte abgeführt werden. Die mechanische Verbindung kann kraftund/oder stoffschlüssig sein. Die kraftschlüssige Verbindung kann durch einen in die Durchgangsöffnung eingebrachten Keil bewirkt werden, der eine Andruckkraft auf den Verbindungsbereich ausübt. Insbesondere kann der Verbindungsbereich durch die Andruckkraft verformt und somit an einen Oberflächenverlauf der Durchgangsöffnung angepasst werden. Die stoffschlüssig Verbindung kann z.B. durch Verlöten des Verbindungsbereichs mit der Öffnungsfiache der Kühlplatte erzielt werden. Über die stoffschlüssige Verbindung von Kühlblech und Kühlplatte kann die Wärmeübertragung weiter verbessert werden. Zudem kann die Wärmeübertragung durch ein Anliegen des Falzbereichs auf einer Oberfläche der Kühlplatte verbessert werden.

Der Falzbereich kann durch eine oder mehrere Falzungen, Biegungen oder Knicke des Metallstreifens gebildet sein. Aufgrund der Flexibilität der Falzung ist ein längenmäßiger Toleranzausgleich möglich. Das bedeutet dass durch ein Auseinanderziehen der Falzung eine Länge des Kühlbtechs vergrößert und durch ein Stauchen der Falzung verringert werden kann. Vorteithaftefweise kann die Länge des Kühlblechs somit an einen vorgegebenen Abstand zwischen der Kühlplatte und einer gegenüberliegenden Halterung angepasst werden. Der Falzbereich kann als Feder wirken.

Gemäß einer Ausführungsform des erfindungsgemäßen Kühlblechs können mindestens der Verbindungsbereich und der Falzbereich je zwei voneinander beabstandete symmetrisch angeordnete Abschnitte aufweisen, Gemäß dieser Ausführungsform kann sich somit der Metallstreifen des Kühlblechs anschließend an den Zellbereich in zwei Stränge teilen. Die Teilung kann in der Form sein, dass der Entkopplungsbereich durch zwei spiegelbildlich nach außen und wieder nach innen gefalzte Schenkel charakterisiert ist, die unter Aufwendung von Kraft jeweils zusammengedrückt und auseinandergezogen werden können. Somit kann der Entkopplungsbereich auch als Felder fungleren und entsprechende Rückstellkäfte bereitstellen. Vorteilhafterweise ist eine derartige Falzung der Kühlblechstreifen technisch einfach realisierbar. Die Falzung kann zum einen Schutz für eine Unterseite der Zelle bieten und zum anderen einen Ausgleichsbereich in dem freiliegenden Bereich des Kühlblechs zwischen dem Zellbereich und dem Verbindungsbereich schaffen. Im Abschnitt des Verbindungsbereichs können die zwei Teile des Kühlblechs in eine Durchgangsöffnung der Kühlplatte eingebracht werden. Die zwei Teile können an gegenüberliegende Wandbereiche der Durchgangsöffnung anliegen. Alternativ kann auch das gesamte Kühlblech aus zwei Teilen bestehen, wobei diese im Abschnitt des Zellbereichs aneinander liegen und miteinander verbunden sein können.

Die vorliegende Erfindung schafft ferner ein Verfahren zum Anbinden eines Kühlblechs für eine galvanische Zelle an eine Kühlplatte, wobei das Verfahren folgende Schritte aufweist: Bereitstellen eines erfindungsgemäßen kühlblechs; Bereitstellen einer Kühlplatte, wobei die Kühlplatte eine Durdigangsöffnung zum Aufnehmen des Verbindungsbereichs des Kuhlblechs aufweist; Einführen des Verbindungsbereichs des Kühlblchs in die Durchgangsöffnung der Kühlplatte, bis der Falzbereich des Kühlblechs auf der Kühlplatte zum Aufliegen kommt; Bereitstellen einer in Richtung der Kühlplatte wirkenden Andruckkraft auf das Kuhlblech, um das Kühlblech in der Durchgangsöffnung der Kühlplatte zu fixieren: und Einbringen eines Befestigungselements in die Durchgangsöffnung von einer dem Falzbereich gegenübertiegenden Seite der Kühlplatte, um den Verbrndungsbereich des Kühlblechs kraftschlüssig an die Kühlplatte anzubinden.

Bei dem Schritt des Einführens des Verbindungsbereichs des Kühlbiechs in die Durchgangsöffnung kann der Falzbereich des Kühlblechs durch die im Montageprozess entstehenden Kräftezusammengedrückt werden und einen federnden Anschlag bilden, so dass das Kühlbleeh zum einen beim Einsetzen abgebremst wird und zum anderen nicht weiter in die Durchgangsöffnung eingeführt werden kann. Somit kann die galvanische Zelle vor Beschädigungen geschützt werden, indem eventuelle Stöße beim Einführen angefangen werden können und ein Anstoßen der galvanischen Zelle auf einer Oberfläche der Kühlplatte verhindert wird. Ferner erlaubt der Falzbereich einen größeren Toleranzbereich, der beim Einbau des Kühlblechs einzuhalten ist, da die Länge des Kühlblechs nach dem Einbau aufgrund des flexiblen Falzbereichs variiert werden kann. Das Befestigungselement kann vorteilhafterweise eine Keilform aufweisen. Weist das Kühiblech im Verbindungsbereich zwei Kühiblechstreifen auf, so kann das Befestigungselement leicht zwischen die zwei Kühlblechstreifen eingebracht werden, um einen Kraftschlusszwischen den Kühlblechstreifen und der Kühlplatte zu schaffen.

Auch kann in dem Schritt des Einbringens des Befestigungselements eine Umformung des Verbindungsbereichs erfolgten. Vor der Veformung kann der Verbindungsbereich zwei parallel verlaufende Kühlblechabschnitte aufweisen. Die Umformung kann bewirken, dass der Verbindungsbereich, also beispielsweise die zwei parallel verlaufenden Kühlblechabschnitte, an einer Innenwand der Durchgangsöffnung anliegt. Die Umformung kann beispielsweise dadurch erzielt werden, dass sowohl die Durchgangsöffnung als auch das Befestigungselement einander entsprechende Formgebungen, beispielsweise Kanten, aufweisen. Somit kann der Verbindungsbereich des Kühlblechs beim Einbringen des Befestigungselements vorteilhaft derart verformt werden, dass der Verbihdungsbereich formschlüssig an die Kühlplatte angebunden wird. Auf diese Weise kann zusätzlich zur kraftschlüssigen Verbindung eine formschlüssige Verbindung geschaffen werden, die eine noch sicherere und robustere Ankoppelung des Kühlblechs an der Kühlplatte ermöglicht.

Folgend auf den Schritt des Einbringens des Befestigungselements kann ein Schritt des Entfernens des Befestigungselements erfolgen. Besteht nur eine kraftschlüssige oder formschlüssige Verbindung, so kann das Kühlblech nach dem Entfernen des Befestigungselements einfach aus der Kühlplatte herausgezogen werden. Dies ist vorteilhaft, um ein Kühlblech mit einer defekten Zelle auf einfache Art und Weise aus der Durchgangsöffnung zu entfernen, ohne dass dabei benachbarte Zellen beschädigt werden.

Auch kann folgend auf den Schritt des Entfernens des Befestigungselements ein Schritt eines stoffschlüssigen Anbindens des Verbindungsbereichs und/oder des Falzbereichs an die Kühlplatte erfolgen. Der Schritt des storfschlussigen Anbindens kann z.B. über einen Schweiß- oder Lötvorgang erfolgen. Vorteilhafterweise kann über das stoffschlüssige Anbinden die Wärmeübertragung von dem Kühlblech auf die Kühlplatte gegenüber der kraftschlüssigen Verbindung noch weiter verbessert werden. Insbesondere schafft hier auch die stoffschlüssig Anbindung des auf der Kühlplatte aufliegenden Abschnitts des Falzbereichs eine zusätzliche vorteilhafte Wärmeübertragungsfläche.

Gemäß einer Ausführungsform kann in dem Schritt des stoffschlüssigen Verbindens das Verbinden mittels eines thermischen Verfahrens mit niedrigem Energieeintrag erfolgen. Auf diese Weise kann eine thermische Beeinträchtigung der galvanischen Zelle vermieden werden. Beispielsweise kann das Kühlblech mittels Laserlötens oder Weichlötens mit der Kühlplatte verbunden werden. Derartige Verbindungsverfahren sind dahingehend von Vorteil, dass sie energiesparend ausgeführt werden können und die Struktur der zu verbindenden Materialien weniger belasten.

Die vorliegende Erfindung schafft ferner eine Zellvorrichtung mit folgenden Merkmalen: Mindestens einem erfindungsgemäßen Kühlblech; mindestens einer galvanischen Zelle, die mit dem Zellbereich des mindestens einen Kühlblechs gekoppelt ist; und einer Kühlplatte mit mindestens einer Durchgangsöffnung zum Aufnehmen des Verbindungsbereichs des mindestens einen Kühlblechs, wobei die Kühlplatte im Bereich der mindestens einen Durchgangsöffnung mechanisch und thermisch mit dem Verbindungsbereich des mindestens einen Kühlblechs verbunden ist. Die galvanische Zelle kann z.B. als eine Lithium-Ionen-Zelle ausgeführt sein, die, häufig in einem Zellverbund mit einer Mehrzahl von Zellen, zur Energieversorgung von Geräten mit hohem Energiebedarf, z.B. Elektro- und Hybridfahrzeuge, eingesetzt werden kann.

Gemäß einer Ausführungsform kann die Durchgangsöffnung auf einer dem Falzbereich zugewandten Seite der Kühlplatte einen kleineren Querschnitt als auf einer dem Falzbereich abgewandten Seite der Kühlplatte aufweisen. Vorteilhafterweise kann so ein z.B. keilformiges Befestigungselement leicht in die Durchgangsöffnung eingeführt und entnommen werden, Zudem wird aufgrund der unterschtedlichen Querschnitte eine formschlüssige Verbindung innerhalb der Kühlplätte möglich.

Auch kann die Zellvorrichtung das Befestigungselement aufweisen. Die Form des Befestigungseiements kann einer Negativform der Durchgangsöffnung entsprechen. Dabei kann das Befestigungselement derart in der Durchgangsöffnung angeordnet sein, dass der Verbindungsbereich des Kühlblechs kraftschlüssig mit dem Bereich der Durchgangsöffnung der Kühlplatte verbunden ist.

Das Befestigungselement kann einen Kunststoff umfassen oder vollständig aus Kunststoff bestehen. Kunststoffe weisen den Vorteil auf, dass sie kostengünstig sind, ein geringes Gewicht aufweisen und sich für die Herstellung der kraftschlüssigen Verbindung zwischen Kühlblech und Kühlplatte eignen.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Schnittdarstellung einer Zellvorrichtung gemäß einem Ausführungsbeispiel der vorliegenden Erfindung;
- Fig. 2: eine weitere Schnittdarstellung einer Zellvorrichtung gemäß eineim Ausführuhgebeispiel der vörliegenden Erfindung;
- Fig. 3: eine vergrößerte Teildarstellung des Ausführungsbeispiels einer Zeilvorrichtung aus Fig. 2; und
- Fig. 4: ein Verfahren zum Anbinden eines Kühlblechs für eine galvanische Zelle an eine Kühlplatte, gemäß einem Ausführungsbeispiel der Erfindung.

In der nachfölgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

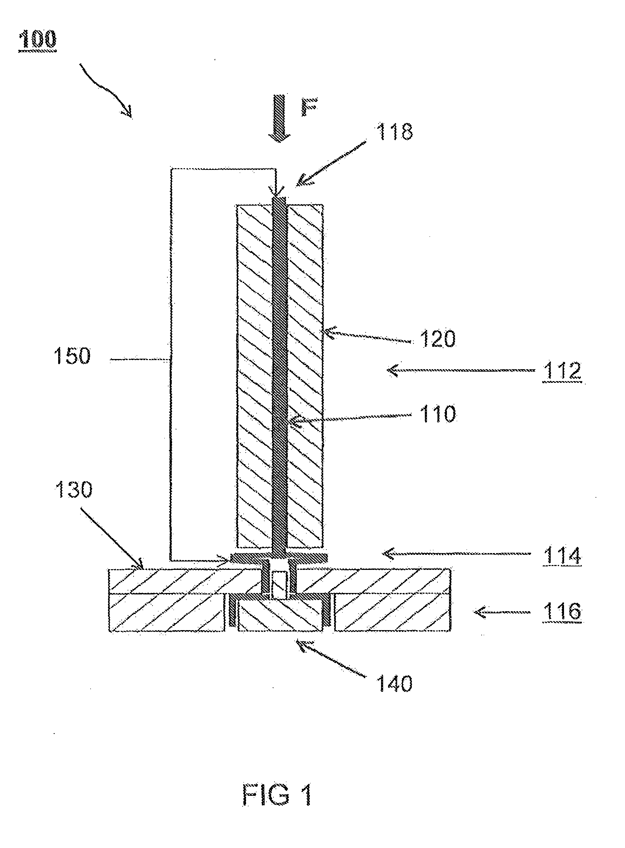

Fig. 1 zeigt eine Zellvorrichtung 100 gemäß einem Ausführungsbeispiel der vorliegenden Erfindung in einer Schnittansicht. Die Zellvorrichtung 100 umfasst ein zweiteiliges Kühlblech 110 mit einem Zechereien 112. einem Falzbereich 114, einem Verbindungsbereich 116. Des Weiteren umfass die Zellvorrichtung 100 eine galvanische Zelle 120, eine Kühlplate oder Wärmesenke 130 sowie ein Befestigungselement 140. Ein bidirektionaler Pfeil 150 kennzeichnet eine kraftschlüssige Verbindung zwischen einem Drückelement 118 und dem Falzbereich 114. Der Druckbereich 118 kann durch ein, der Kühlplatte 130 gegenüberliegendes freistehendes Ende des Zeilbereichs 112 ausgebildet werden. Auf den Druckbereich 118 kann eine kraft F einwirken, die einen Druck auf das Kühlblech 110 in Richtung der Kühlplatte 130 ausübt.

In dem in Fig. 1 gezeigten Ausführungsbeispiel ist das Kühlblech 110 in dem Zellbereich 112gerade geformt und mit der galvanischen Zelle 120 gekoppelt. Der Zellbereich 112 fungiert so als Halterung und Wärmeableiter für die Zelle 120. Das Kühlblech 110 kann in dem Zellbereich 112 einteilig sein oder aus zwei aneinander liegenden parallelen Teilen bestehen. An den Zellbereich 112 schließt der Fabbereich 114 an. Der Falzbereich 114 weist zwei voneinander beabstandete Abschnitte auf, die an einem Ende jeweils mit dem Zellbereich 112 verbunden und auf einem gegenüberliegenden Ende jeweils mit einem Abschnitt des, in diesem Ausführungsbeispiel, zweiteiligen Verbindungsbereichs verbünden sind. Der Falzbereich 114 ist durch eine Falzung der voneinander beabstandeten Abschnitte, jeweils nach außen gekennzeichnet. Die beiden Abschnitte bilden somit zwei spiegelbildlich nach außen und wieder nach innen gefalzte Schenkel. Jeder Abschnitt verläuft somit, ausgehend von der Verbindung mit dem Zellbereich 112 schräg in Richtung der Kühlplatte 130, weist dann die Falzung auf und verläuft wiederum schräg in Richtung der Kühlplatte 130 zu einem Verbindungspunkt mit dem entsprechenden Abschnitt des Verbindungsbereichs hin. Die Falzung stellt die Entkoppefung der mechanischen Belastung auf die thermische Kontaktierung bereit. Ein auf Seiten der Kühlplatte 130 abschließender Teil des Kühlbiechs 110 wird. von dem Verbindungsbereich 116 gebildet. Hier ist das Kühlblech 110 im Bereich einer Durchgangsöffnung der Kühlplatte 130 mittels des Befestigungselements 140 kraft- und/oder stoffschlüssig mit der Kühlplatte 130 verbunden. Die Kühlplatte 130 weist gemäß diesem Ausführungsbeispiel zwei Lagen auf. Die Durchgangsöffnung verläuft durch beide Lagen. In der, der Zelle 120 zugewandten Lage, weist die Durchgangsöffnung einen kleineren Durchmesser auf, als in der, der Zelle 120 abgewandten Lage. Beim Einführen des Verbindungsbereichs 116 in die Durchgangsöffnung können die beiden Abschnitte des Kühlblechs parallel verlaufen. Durch das Einbringen des Befestigungselements 140 können die beiden Abschnitte, aufgrund des sich veränderlichen Durchmessers der Durchgangsöffnung, so umgeformt werden, dass sie an einem jeweils gegenüberliegenden Wandbereich der Durchgangsöffnung anliegen.

Selbstverständilch kann die Zellvorrichtung 100 auch eine Mehrzahl von galvanischen Zellen 120 aufweisen. Die einzelnen Zellen 120 sind auf Kühlblechen 110 befestigt. Das Kühlblech 110 übernimmt die mechanische Aufhängung der Zelle und die thermische Kontaktierung, d.h. die Kahlung, und kann, wie bereits erwähnt, aus zwei Teilen bestehen. Weist die Zellvorrichtung 100 eine Mehrzahl von Kühlblechen 110 auf, so kann die Kühlplatte 130 für jedes Kühlblech 110 eine Durchgangsöffnung aufweisen.

Somit zeigt Fig. 1 eine konstruktive Auslegung des Kühlblechs 110 für eine kraftschlüssige Verbindung bei gleichzeitiger Entkopplung der mechanischen Belastung auf die thermische Kontaktierung. Das Kühlblech 110 wird von oben mittels der Anpresskraft F auf der Kühlplatte 130 positioniert und fixiert, die Kraft F wird unten durch den umgefalzten Bereich 114 des Kühlblechs 110 aufgenommen. Das Kühlblech 110 durchdringt die Kühlplatte 130 und wird von unten mit Hilfe des Befestigungselements 140 umgeformt, an die Kühlplatte 130 angelegt und somit thermisch kontaktiert.

Die kraftschfüssige Verbindung entkoppelt die mechanische Belastung der thermischen Verbindung zwischen dem Kühlblech 110 und der Kühlplatte 130. Daraus ergeben sich eine thermisch bessere Kontaktierung sowie eine wiederlösbare Verbindung zwischen dem Kühlblech 110 und der Kühlplatte 130. Außerdem kann sich die Wärmeübertragung zwischen dem Kühlblech 100 und der Kühlplatte 130 nicht durch mechanische Belastungen verschlechtern. Die Verbindung kann für den Austausch defekter Zellen 120 wieder gelöst werden, ohne dass intakte Zellen 120 thermisch beeinträchtigt werden.

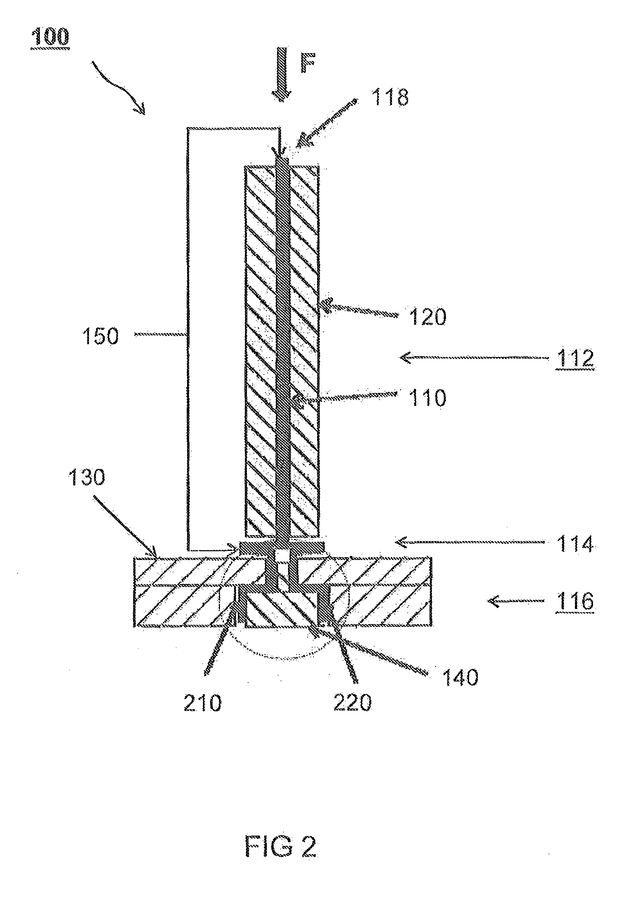

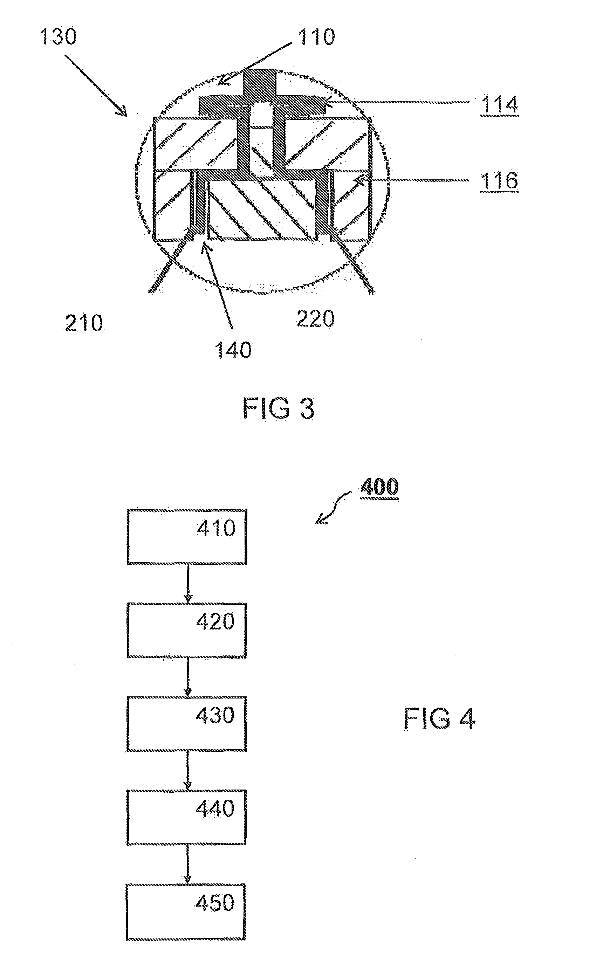

Fig. 2 zeigt das Ausführungsbeispiel der Zellvorrichtung 100 aus Fig. 1. In Fig. 2 weist die Zellvorrichtung 100 eine zusätzliche stoffschlüssigen Verbindung 210, 220 im Bereich der Durchgangsöffnung der Kühlplatte 130 auf. Die stoffschlüssige Verbindung kann zwischen der Kühlplatte 130 einerseits und dem Verbindungsbereich 116 und/oder dem Falzbereich 114 des Kühlblechs 110 andererseits bestehen. Dieser Bereich der stoffschlüssigen Verbindung ist in Fig. 2 durch eine untetbrochene Kreislinie angedeutet und in Fig. 3 größer dargestellt.

Fig. 2 zeigt somit eine konstruktive Auslegung des Kühlblechs 110 für eine kraftschlüssige Verbindung gemäß der Darstellung aus Fig. 1 bei gleichzeitiger Entkopplung von Kraft- und Stoffschluss. Diese Auslegung ermöglicht eine optimale Wärmeübertragung durch den Stoffschluss zwischen dem Kühlblech 110 und der Wärmesenke 130 mittels eines thermischen Verfahrens mit niedrigem Energieeintrag. Bei einem derartigen thermischen Verfahren kann es sich z.B. um Laserlöten oder Weichlöten handeln. Der Energieeintrag kann über die Wärmesenke 130 während der Montage abgeführt werden. Zusätzlich besteht die kraftschtössige Verbindung zur Entkopplung der stoffschtusstgen Verbindung von mechanischer Belastung gemäß der Darstellung in Fig. 1.

Gemäß der Darstellung in Fig. 2 kann also die stoffschlüssige Verbindung zwisehen dem Kühlblech 110 und der Wärmesenke 130 den Wärmeübergang zusätzlich verbessern Durch die Konstruktion wird eine thermische Beeinträchtigung der Zelle 120 während des Stoffschlussesses verhindert. Zusätzlich entkoppelt diese Verbindung den Kraft- und Stoffschluss, wie es in Fig. 1 dargestellt ist, so dass keine mechanische Belastung auf die stoffschlüssige Verbindung einwirken und die Wärmeleitung dadurch verschlechtern kann.

Fig. 3 zeigt einen vergrößerten Ausschnitt des in Fig. 2 durch die unterbrochene Kreislinie hervorgehobenen Bereichs der Zellvorrichtung 100, in dem die stoffschlüssige Verbindung zwischen dem Kühlblech 110 und der Kühlplatte 130 besteht. Die beiden Abschnitte des Verbindungsbereichs 116 des Kühlblechs 110 sind mittelts des Befestigungselements 140 an jeweils gegenüberliegende Flächen der Durchgangsöffnung der Kühlplatte 130 abgedrückt. Nach Entnahme des Befestigungselements 140 (in Fig. 3 nicht gezeigt) können die aneinander liegenden Oberflächen des Verbindungsbereichs 116 und der Durchgangsöffnung z.B. durch Laserlöten stoffschlüssig miteinander verbunden werden, wie dies durch zwei Pfeile 210 und 220 angedeutet ist. Insbesondere kann auch der mittels der Andruckkraft F auf der Kühlplatte aufliegende Abschnitt des Falzbereichs 114 durch das verwendete thermische Verfahren stoffschlüssig an die Kühlplatte 130 angebunden werden. Dies kann den Wärmeübergang zusätzlich verbessern. In diesem Fall können, der Kühlplatte 130 gegenüberliegende Schenkel des Falzbereichs 114 parallel zu einer Oberfläche der Kühlplatte 130 ausgerichtet sein. Ein längenmäßiger Ausgleich des Kühlblechs 110 kann in diesem Fall über den weiteren Schenken des Falzbereichs 114 erfolgen,

Schließlich zeigt Fig. 4 ein Verfahren 400 zum Anbinden eines Kühlblechs für eine galvanische Zelle an eine Kühlplatte, gemäß einem Ausführungsbeispiel der Erfindung. Dabei kann es sich um das in den vorangegangenen Figuren gezeigte Kühlblech mit einem Zellbereich, einem Falzbereich und einem Verbildungsbereich handeln. Das Verfahren 400 umfasst einen Schritt eines Bereitstellens 410 des Kühlblechs, einen weiteren "Schritt eines Bereitstellens 420 der Kühlplatte, einen weiteren Schritt eines Einführens 430 des Verbindungsbereichs des Kühlblechs in die Kühlplatte, einen weiteren Schritt eines Bereitstellens 440 einer Andruckkraft auf das Kühlblech sowie schließlich einen Schritt eines Einbringens 450 eines Befestigungselements in die Kühlplatte.

Die Kühlplatte kann eine Durchgangsöffnung zum Aufnehmen des Verbindungsbereichs des Kuhlblechs aufweisen. In dem Schritt 430 wird der Verbindungsbereich des Kühlblechs derart in die Durchgangsöffnung der Kühlplatte eingeführt, dass der Falzbereich des Kühlblechs auf der Kühlplatte zum Aufliegen kommt. Dabei oder anschließend wird in dem Schritt 440 eine in Richtung der Kühlplatte wirkende Andruckkraft auf das Kühlblech bereitgestellt, um das Kühlblech in der Durchgangsöffnung der Kühlplatte zu fixieren. Schließlich wird in dem Schritt 450 von einer dem Falzbereich gegenüberliegenden Seite der Kühlplatte ein Befestigungselement in die Durchgangsöffnung eingebracht, um den Verbindungsbereich des Kühlblechs kraftschlüssig an die Kühlplatte anzubinden.

Die Schritte des Verfahrens 400 können auch in einer anderen als der genannten Reihenfolge durchgeführt werden. Zudem sind die beschriebenen Ausführungsbeispiele nur beispielhaft gewählt und können miteinander kombiniert werden.

## Patentansprüche

1. Kühlblech (110) für eine galvanische Zeile (120), mit folgenden Merkmalen;
einem Zellbereich (112), der ausgebildet ist, um mit der galvanischen Zelle gekoppelt zu werden;
einem Verbindungsbereich (116), der ausgebildet ist, um mechanisch und thermisch mit einer Kühlplatte (130) verbunden zu werden; und
einem Falzbereich (114), der zwischen dem Zellbereich und dem Verbindungsbereich angeordnet ist und eine flexible Falzung des Kühlblechs aufweist.

2. Kühlblech (110) gemäß Anspruch 1, bei dem mindestens der Verbindungsbereich (116) und der Falzbereich (114) je zwei voneinander beabstandete symmetrisch angeordnet Abschnitte ausweisen.

3. Verfahren (400) zum Anbinden eines Kühlblechs (110) für eine galvanische Zelle (120) an eine Kühlplatte (130), mit folgenden Schritten:
Bereitstellen (410) eines Kühlblechs gemäß Anspruch 1;
Bereitstellen (420), einer Kühlplatte, wobei die Kühlplatte eine Durchgangsöffnung zum Aufnehmen des Verbindungsbereichs (116) des Kühlblechs aufweist;
Einführen (430) des Verbindungsbereichs des Kühlblechs in die Durchgangsoffnung der Kühlplatte, bis der Falzbereich (114) des Kühlblechs auf der Kühlplatte zum Aufliegen kommt;
Bereitstellen (440) einer in Richtung der Kühlplatte wirkenden Andruckkraft (F) auf das Kühlblech, um das Kühlblech in der Durchgangsöffnung der Kühlplatte zu fixieren; und
Einbringen (450) eines Befestigungselements (140) in die Durchgangsöffnung von einer dem Falzbereich gegenüberliegenden Seite der Kühlplatte, um den Verbindungsbereich des Kühlblechs kraftschlüssig an die Kühlplatte anzubinden.

4. Verfahren (400) gemäß Anspruch 3, bei dem in dem Schritt des. Einbringens (450) des Befestigungselemehts (140) eine Umformung des Verbindungsbereichs (116) erfolgt, derart, dass der Verbindungsbereich an einer Innenwand der Durchgangsöffnung anliegt.

5. Verfahren (400) gemäß Anspruch 3 oder 4, bei dem folgend auf den Schritt des Einbringens (450) des Befestigungselements (140) ein Schritt des Entfernens des Befestigungselements erfolgt.

6. Verfahren (400) gemäß Anspruch 5, bei dem folgend auf den Schritt des Entfernens des Befestigungselements (140) ein Schritt eines stoffschlüssigen Anbindens des Verbindungsbereichs (116) und/oder des Falzbereichs (114) an die Kühlplatte (130) erfolgt.

7. Verfahren (400) gemäß Anspruch 6, bei dem in dem Schritt des stoffschlüssigen Verbindens das Verbinden mittels eines thermischen Verfahrens mit niedrigem Energieeintrag erfolgt, um eine thermische Beeinträchtigung der galvanischen Zelle (120) zu vermeiden.

8. Zellvorrichtung (100) mit folgenden Merkmalen:
mindestens einem Kühlblech (110) gemäß Anspruch 1;
mindestens einer galvanischen Zelle (120), die mit dem Zechereich (112) des mindestens einen Kühlblechs gekoppelt ist; und
einer Kühlplatte (130) mit mindestens einer Durchgangsöffnung zum Aufnehmen des Verbindungsbereichs (116) des mindestens einen Kühlblechs, wobei die Kühlplatte, im Bereich der mindestens einen Durchgangsöffnung mechanisch und thermisch mit dem Verbindungsbereich des mindestens einen Kühlblechs verbunden ist.

9. Zellvorrichtung (100) gemäß Anspruch 18, bei der die Durchgangsöffnung auf einer dem Fälzbereich (114) zugewandten Seite der Kühlplatte (130) einen kleineren Querschnitt als auf einer dem Falzbereich abgewandten Seite der Kühlplatte aufweist.

10. Zellvorrichtung (100) gemäß Anspruch 8 oder 9, die ein Befestigungselement (140) aufweist, dessen Form einer Negativform der Durchgangsöffnung entspricht, und wobei das Befestigungselement derart in der Durchgangsöffnung angeordnet ist, dass der Verbindungsbereich (116) des Kühlblechs (110) kraftschlüssig mit dem Bereich der Durchgangsöffnung der Kühlplatte (130) verbunden ist.

11. Zeilvorrichtung (100) gemäß einem der Ansprüche 8 bis 10, bei der das Befestigungselement (140) einen Kunststoff umfasst.

## Claims

1. A cooling sheet (110) for an electrochemical cell (120) having the following features: a cell region (112), which is designed to be coupled to the electrochemical cell; a connecting region (116), which is designed to be connected mechanically and thermally to a cooling plate (130); and a fold region (114), which is arranged between the cell region and the connecting region and comprises a flexible fold of the cooling sheet.

2. The cooling sheet (110) according to claim 1, wherein at least the connecting region (116) and the fold region (114) have two spaced-apart, symmetrically arranged sections.

3. A method (400) for connecting a cooling sheet (110) for an electrochemical cell (120) to a cooling plate (130), having the following steps: providing (410) a cooling sheet according to claim 1; providing (420) a cooling plate, wherein, the cooling plate has a through-opening for receiving the connecting region (116) of the cooling sheet; inverting (430) the connecting region of the cooling sheet into the through-opening in the cooling plate, until the fold region (114) of the cooling sheet comes to lie on the cooling plate; providing (440) a pressing force (F), acting in the direction of the cooling plate, on the cooling sheet so as to fix the cooling sheet in the through-opening in the cooling plate; and introducing (450) a fastening element (140) intro the through-opening from a side of the cooling plate opposite the fold region so has to attach the connecting region of the cooling sheet in a force-fitting manner to the cooling plate.

4. The method (400) according to claim 3, wherein, in the step of introducing (450) the fastening element (140), the connecting region (116) is reshaped in such a way that the connecting region abuts an inner wall of the through-opening.

5. The method (400) according to claim 3 or 4, wherein a steep of removing the fastening element is performed after the step of introducing (450) the fastening element (140).

6. The method (400) according to claim 5, wherein a step of attaching the connecting region (116) and/or the fold region (114) to the cooling plate (130) in an integrally bonded manner is performed after the step of removing the fastening element (140).

7. The method (400) according to claim 6, wherein, in the step of the integrally bonding connection, the connection is made by means of a thermal process with a low energy input to avoid a negative thermal effect of the electrochemical cell (120).

8. A cell device (100) having the following features: at least one cooling sheet (110) according to claim 1; at least one electrochemical cell (120), which is coupled to the cell region (112) of the at least one cooling sheet; and a cooling plate (130) with at least one through-opening for receiving the connecting region (116) of the at least one cooling sheet, wherein the cooling plate in the region of the at least one through-opening is connected mechanically and thermally to the connecting region of the at least one cooling sheet.

9. The cell device (100) according to claim 8, wherein, the through-opening, on a side of the cooling plate (130) facing the fold region (114), has a smaller cross section than on a side of the cooling plate facing away from the fold region.

10. The cell device (100) according two claim 8 or 9, which has a fastening element (140), of which the shape corresponds to a negative shape of the through-opening, and wherein the fastening element is arranged in the through-opening in such a way that the connecting region (116) of the cooling sheet (110) is connected in a force-fitting manner to the region of the through-opening in the cooling plate (130).

11. The cell device (100) according to any one of claims 8 to 10, wherein the fastening element (140) comprises a plastic.

## Revendications

1. Tôle de refroidissement (110) pour une cellule galvanique (120), ayant les caractéristiques suivantes: une zone cellulaire (112) qui est configurée pour être couplée à la cellule galvanique; une zone de liaison (116) qui est configurée pour être reliée mécaniquement et thermiquement à une plaque de refroidissement (130); et une zone de pliage (114) qui est disposée entre la zone cellulaire et la zone de liaison et présente un pliage flexible de la tôle de refroidissement.

2. Tôle de refroidissement (110) selon la revendication 1, dans laquelle au moins la zone de liaison (116) et la zone de pliage (114) présentent chacune deux parties disposées symétriquement et espacées l'une de l'autre.

3. Procécé (400) pour accoler une tôle de refroidissement (110) prévue pour une cellule galvanique (120), à une plaque de refroidissement (130), ledit procédé comportant les étapes suivantes consistant: à fournir (410) une tôle de refroidissement selon la revendication 1; à fournir (420) une plaque de refroidissement, où la plaque de refroidissement présente une ouverture de passage pour loger la zone de liaison (116) de la tôle de refroidissement; à introduire (430) la zone de liaison de la tôle de refroidissement, dans l'ouverture de passage de la plaque de refroidissement, jusqu'à ce que la zone de pliage (114) de la tôle de refroidissement vienne en appui sur la plaque de refroidissement; à exercer (440) une force de pression (F) sur la tôle de refroidissement, ladite force de pression agissant en direction de la plaque de refroidissement, pour fixer la tôle de refroidissement dans l'ouverture de passage de la plaque de refroidissement ; et à introduire (450) un élément de fixation (140) dans l'ouverture de passage d'un côté de la plaque de refroidissement, situé à l'opposé de la zone de pliage, pour accoler à la plaque de refroidissement, par action de force, la zone de liaison de la tôle de refroidissement.

4. Procédé (400) selon la revendication 3, dans lequel, au cours de l'étape de l'introduction (450) de l'élément de fixation (140), il se produit une déformation de la zone de liaison (116), de manière telle que la zone de liaison vienne en appui sur une paroi intérieure de l'ouverture de passage.

5. Procédé (400) selon la revendication 3 ou 4, dans lequel, faisant suite à l'étape de l'introduction (450) de l'élément de fixation (140), il se produit une étape de l'élimination de l'élément de fixation.

6. Procédé (400) selon la revendication 5, dans lequel, faisant suite à l'étape de l'élimination de l'élément de fixation (140), il se produit une étape consistant à accoler à la plaque de refroidissement (130), par continuité de matière, là zone de liaison (116) et/ou la zone de pliage (114).

7. Procédé (400) selon la revendication 6, dans lequel, au cours de l'étape de la liaison réalisée par continuité de matière, la liaison se produit au moyen d'un procédé thermique à faible apport d'énergie, pour éviter une altération thermique de la cellule galvanique (120).

8. Dispositif cellulaire (100) ayant les caractéristiques suivantes: au moins une tôle de refroidissement (110) selon la revendication 1; au moins une cellule galvanique (120) qui est couplée à la zone cellulaire (112) de la tôle de refroidissement au moins au nombre de un; et une plaque de refroidissement (130) avant au moins une ouverture de passage pour le logement de la zone de liaison (116) de la tôle de refroidissement au moins au nombre de un, où la plaque de refroidissement, dans la zone de l'ouverture de passage au moins au nombre de un, est reliée mécaniquement et thermiquement à la zone de liaison de la tôle de refroidissement an moins au nombre de un.

9. Dispositif cellulaire (100) selon la revendication 8, dans lequel l'ouverture de passage présente, sur un côté de la plaque de refroidissement (130) tourné vers la zone de pliage (114), une section plus petite que celle du côté de la plaque de refroidissement placé à l'opposé de la zone de pliage.

10. Dispositif cellulaire (100) selon la revendication 8 ou 9, qui présente un élément de fixation (140) dont la forme correspond à une forme négative de l'ouverture de passage, est où l'élément de fixation est disposé dans l'ouverture de passage, de manière telle que la zone de liaison (11.6) de la tôle de refroidissement (110) soit reliée, par action de force, à la zone de l'ouverture de passage de à plaque de refroidissement (130).

11. Dispositif cellulaire (100) selon l'une quelconque des revendications 8 à 10, dans lequel l'élément de fixation (140) comprend une matière plastique.
